# EUROPEAN PATENT SPECIFICATION

(11) **EP 1 532 864 B1**
(45) Date of publication and mention of the grant of the patent: **04.07.2007**
(21) Application number: 03394109.7
(22) Date of filing: 20.11.2003
(51) Int. Cl.: A23D 7/015, A23L 1/053, A23D 9/007

(54) **A low fat dairy product**
Fettarmes Milchprodukt
Produit laitier allégé en matières grasses

(43) Date of publication of application: 25.05.2005
(73) Proprietor: Kerry Group Services International Limited, Tralee Co. Kerry (IE)
(72) Inventor: Flynn, Callaghan, County Kerry (IE); Bouchier, Paul, County Cork (IE)
(74) Representative: Schütte, Gearoid

(56) References cited:
- EP-A- 0 596 546
- EP-A- 0 997 075
- EP-A- 1 133 922
- US-A- 5 009 912
- US-A- 5 593 716
- US-B1- 6 322 844

## Description

### Introduction

The present invention relates to a low fat dairy product which is a water-in-oil emulsion comprising an oil continuous phase comprising fat and an aqueous dispersed phase comprising water and a gelling agent.

In water-in-oil emulsions aqueous droplets are dispersed in an oil phase. In the specification the term "low fat dairy product refers to a dairy product in which the fat content does not exceed 60% fat by weight of the dairy product.

The main problem which has been encountered in the manufacture of low fat products which are water-in-oil emulsions is that the aqueous droplets are disrupted readily during spreading due to the small amount of fat in the continuous phase. The disadvantage of disruption during spreading is that the product releases liquid, and flavour is lost. It has been found that the addition of gelling agents increases the stability of the emulsion and thus prevents disruption during spreading.

Gelling agents which are soluble in oil have only been considered for water-in-oil emulsions. Guar gum has been proposed as a gelling agent in water-in-oil emulsions. However the gel formed when mixing guar gum and water is far too stable when eaten and gives a waxy impression on the palate. UK patent no. 1 564 800 discloses the use of gelatine in low-fat spreads, however the relatively high cost of gelatine renders the use of this ingredient less attractive than other low cost gelling agents. Guar gum and gelatine have the ability to dissolve in both water and oil. Alginate has also been used extensively as a gelling agent in water and oil emulsions. It has been found to have good emulsion stability properties but poor melt characteristics.

Starch has also been previously proposed as a gelling agent. European Patent No. 0 327 225 discloses a low fat spread comprising a continuous fat phase and a dispersed aqueous phase and further comprises a modified starch as a gelling agent. US Patent No. 5,904,949 discloses a fat continuous spread having up to about 65% fat by weight of the spread and a dispersed aqueous phase which contains an amylose containing gelling starch. US Patent No. 4 917 915 discloses a low fat spread containing less than 30% fat by weight of the spread having an aqueous phase comprising gelling hydrolysed starch derivative.

The disadvantages of using starch as a gelling agent are that it imparts a starchy flavour to the product which is unpalatable. It has been found that existing low fat spreads containing starch are not suitable for heating applications such as in the manufacture of toasted sandwiches. When heated the starch component melts to a gel and water is released. Furthermore it is sometimes necessary to modify the starch so as to provide starches having rheological properties that are useful.

It is well known to use gum arabic as a gelling agent in oil-in-water emulsions, i.e. emulsions having oil droplets dispersed in an aqueous phase. Gum arabic is a water soluble gum obtained from various species of Acacia trees of the leguminosae family and has been shown to have an important role in applications such as confectionary, brewing, pharmaceuticals, cosmetics, lithography, ink and textiles.

Gum arabic is a complex and variable mixture of arabinogalactan oligosaccharides, polysaccharides and glycoproteins. It consists of a mixture of lower molecular weight polysaccharide having a molecular weight in the region of 0.25 x 10⁶ and to a lesser extent a higher molecular weight hydroxyproline-rich glycoprotein having a molecular weight in the region of 2.5 x 10⁶.

US Patent No. 5,538,751 discloses a thickened foodstuff which is an oil-in-water emulsion having improved storage stability and retention of smoothness comprising a sheared amylopectin component such as gum arabic. US Patent No. 5,009,912 discloses a method of making a milk formulation which is an oil-in-water emulsion comprising gum arabic.

Gum arabic has been considered for use in oil-in-water emulsions but not water-in-oil emulsions as it is insoluble in oil and most organic solvents and therefore does not appear to possess any of the properties suitable for use as a gelling agent in water-in-oil emulsions.

Thus there is the need for water-in-oil emulsion comprising a gelling agent which does not have any of the above mentioned disadvantages. There is further a need for a low fat dairy product which is stable during spreading but destabilises and releases its flavour in the mouth.

### Statements of Invention

According to the invention there is provided a low fat dairy product which is a water-in-oil emulsion comprising:
an oil continuous phase comprising fat; and
an aqueous dispersed phase comprising water and a gelling agent;
characterised in that the gelling agent is gum arabic and is in the amount 2% to 35% by weight of the water.

The advantage of using gum arabic as a gelling agent is that it has an extremely high solubility in water. Furthermore, even though large quantities of gum arabic can be dissolved in water, this does not adversely affect the viscosity of the emulsion. Most gums if dissolved in water at concentrations higher than about 5% would result in highly viscous solutions unsuitable for use in emulsions. Gum arabic however can yield solutions of up to 50% concentration at relatively low viscosities. High viscosities are generally not obtained with gum arabic until concentrations in excess of 50% are achieved. At concentrations up to 40% gum arabic solutions exhibit typical Newtonian behaviour i.e. the shear stress of the fluid is proportional to the shear rate of the fluid.

As gum arabic is water soluble only, one would predict that gum arabic would weaken water-in-oil emulsions giving unstable products with short shelf life and poor application functionality. On the contrary however, gum arabic has been found to be an effective emulsifier in water-in-oil emulsions.

Furthermore low fat products containing gum arabic have been found to have good flavour characteristics, mouthfeel and flavour release. Gum arabic also assists in the stabilisation of probiotic bacteria. Low fat spreads containing gum arabic have melt characteristics similar to butter.

Ideally, the gum arabic is in the amount 10% to 30% by weight of the water.

Preferably the gum arabic is in the amount 2% to 10% by weight of the dairy product.

In one embodiment of the invention the gum arabic has a solubility in water in the range 10g to 50 g/100ml.

The advantage of the gum arabic having an extremely high solubility in water, is that although it is water soluble only, it can be used in emulsions having a lower content of water than oil-in-water emulsions such as water-in-oil emulsions due to this high level of solubility.

In a further embodiment of the invention the gum arabic has a viscosity of between 70 and 130 cPs at a concentration of 25% by weight of the water.

The advantage of the gum arabic having a relatively low viscosity even at high concentrations, is that it is possible to use high concentrations of gum arabic so that it will impart its favourable characteristics, however this will not adversely affect the viscosity of the product. Gum arabic increases the viscosity of the aqueous dispersed phase to a desired level. This ensures that when the product is being spread that there is less chance of the dispersed aqueous bubbles being disrupted.

Ideally the aqueous dispersed phase has a droplet size in the range 1 to 30µm. The advantage of the droplet size being maintained in the region of 1 -30µm is to reduce bacterial growth and extend shelf life. The advantage of having larger bubbles is that larger bubbles generally provide enhanced perceived flavour burst. The addition of gelling agents generally allows for the formation of larger dispersed water phase droplets.

In one embodiment of the invention the oil continuous phase comprises fat in the amount 20% to 60% by weight of the dairy product.

In a further embodiment of the invention the oil continuous phase comprises fat at a concentration in the range 30% to 50% by weight of the dairy product.

Further preferably, the fat comprises at least 10% polyunsaturated fatty acids. The advantage of the fat comprising polyunsaturated fatty acids is that they have more favourable health implications for the consumer than saturated fatty acids.

Preferably the fat is selected from the group comprising one or more of milk fat; vegetable fat; vegetable oil; soy bean oil; sunflower oil; sesame oil; corn oil; safflower oil; palm oil; bean oil; olive oil; peanut oil; rapeseed oil; cottonseed oil; sardine oil; lard; tallow; linseed oil and sterols.

In one embodiment of the invention the aqueous dispersed phase further comprises a protein in the amount 0.5% to 15% by weight of the aqueous dispersed phase. Ideally the protein is a milk protein.

The advantage of adding protein is to improve the organoleptic properties of the emulsion. Some proteins however, especially milk proteins, have a strong destabilising effect on the emulsions and gum arabic has a further role in counteracting this destabilising effect.

In another embodiment of the invention the aqueous dispersed phase further comprises a stabiliser in the amount 0.12% to 2.25% by weight of the aqueous dispersed phase.

Ideally, the stabiliser is selected from the group comprising alginate, pectin, guar, xanthan, gelatine and carboxymethyl cellulose. The advantage of adding a stabiliser is to increase the viscosity of the water phase to a desired level as it binds free water. This leads to a firmer emulsion.

In a further embodiment of the invention the aqueous dispersed phase further comprises a pro-biotic culture in the amount 0.02% to 0.2% by weight of the aqueous dispersed phase. The pro-biotic bacteria are encapsulated in the aqueous dispersed phase. Gum arabic also plays a role in encapsulating and protecting pro-biotic bacteria.

In a still further embodiment of the invention the aqueous dispersed phase further comprises a preservative in the amount 0.01 % to 0.75% by weight of the aqueous dispersed phase.

Ideally, the preservative is one of potassium sorbate or nisin. The advantage of adding a preservative is to extend the shelf life of the product.

In a still further embodiment of the invention, the oil continuous phase further comprises a colour in the amount 0.005% to 0.1 % by weight of the oil continuous phase.

Ideally, the colour is beta carotene. The advantage of adding colour is to improve the appearance of the product and to give the product a butter like appearance.

According to the invention there is provided a dairy product which is one of a low fat butter, a low fat margarine, or a low fat spread.

According to the invention there is further provided a process for preparing a low-fat dairy product which is a water-in-oil emulsion comprising;
obtaining water and dissolving gum arabic in the water in the amount 2% to 35% by weight of the water to form an aqueous phase;
adjusting the aqueous phase to a pH of between 5.0 and 6.0;
combining the aqueous phase and an oil phase containing fat and mixing to form a water-in-oil emulsion;
cooling and refining the water-in-oil emulsion;

Although it had been predicted that gum arabic would not act as an effective emulsifier in water-in-oil emulsions as there is not enough water present to allow a sufficient amount of gum arabic to dissolve, the predicted problems have been overcome due to the high water solubility of the gum Arabic which allows it to fully dissolve and be fully hydrated during the manufacturing process.

The advantage of fully dissolving the gum before the addition of the other components is that it becomes a more effective emulsifier. It has also been found that if gum arabic is not fully hydrated before the addition of other components this will result in weak emulsions.

Preferably the pH of the aqueous phase is adjusted by addition of an acidifier selected from the group comprising one of lactic acid or citric acid.

Further preferably the pH of the aqueous phase is adjusted by addition of an alkali selected from the group comprising sodium hydroxide.

The advantage of maintaining the pH below 6.0 is to provide effective microbial control and good flavour with the lowest necessary levels of preservatives. Furthermore, maintaining the pH below 6.0 allows better solubility of the gum arabic in the water.

### Detailed Description of the Invention

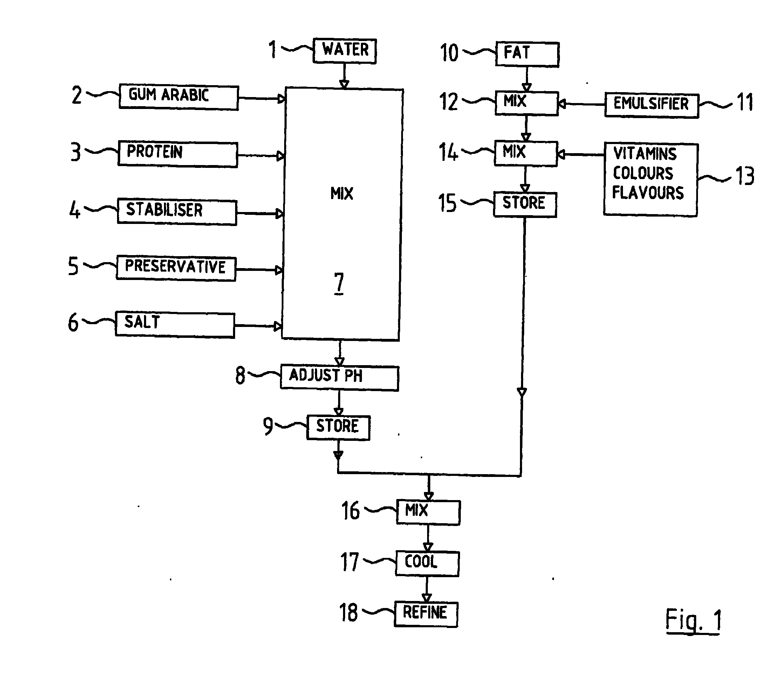

The invention will be more clearly understood from the following description of the process according to the present invention described with reference to Fig. 1 of the drawings which outlines the process according to the invention. All of the equipment used in carrying out the process is well known equipment and accordingly does not require any further description.

Steps 1 to 9 illustrate the process for preparation of the aqueous dispersed phase. Referring to Fig 1 in step 1, water is added to a manufacturing vessel. Gum arabic is added to the water at a concentration of between 2% and 35% by weight of the water and is mixed using an agitator until fully dissolved to form an aqueous phase in step 2. In step 3 a protein is added to the mixture in the amount 0.5% to 15% by weight of the aqueous phase. In step 4 a stabiliser is added to the mixture in the amount 0.12% to 2.25% by weight of the aqueous phase. In step 5 a preservative is added to the mixture in the amount 0.01% to 0.75% by weight of the aqueous phase. In step 6 salt is added to the mixture in the amount 0.75% to 5.0% by weight of the aqueous phase. In step 7 all the added ingredients are mixed together until they are dissolved. In step 8 the mixture is adjusted to a pH of between 5.0 and 6.0 by adding either acid or alkali drop wise to reach the desired pH range and the mixture is stored in step 9.

Steps 10-12 illustrate the preparation of the oil continuous phase. In step 10 fat at a temperature of between 30°C to 50°C is added to a manufacturing vessel and in step 11 emulsifier is added to the fat in the amount 0.15% to 4.5% by weight of the oil phase and mixed in step 12 to form a fat mixture. In step 13 vitamins, colours and flavours are added to the fat mixture in the amounts 0.17% to 0.5%, 0.005% to 1.0% and 0.005% to 1.0% respectively by weight of the oil phase and mixed using an agitator in step 14. In step 15, the oil phase is stored. In step 16 the aqueous dispersed phase and oil continuous phase are mixed together at a ratio of between 40% to 80% aqueous phase: 60% to 20% oil phase to form a water-in-oil emulsion. In step 17 the emulsion is cooled to a temperature in the range 6°C to 15°C using a scrape surface cooling system and is refined in step 18.

Ingredients such as protein, stabiliser, preservative, salt, emulsifier, vitamins, colours and flavours are optional ingredients and are added optionally within the ranges specified above depending on the desired product.

### Example 1 - Preparation of a Low Fat Butter

The low fat butter was prepared by adding water to a manufacturing vessel. Gum arabic was added to the water at a concentration of 4.6% by weight of the water and the gum arabic and water were mixed together until fully dissolved using an agitator to form an aqueous phase. 1.2% milk protein by weight of the aqueous phase was then added to the mixture as well as preservatives in the amount 0.12% by weight of the aqueous phase, salt at 0.9% and mixed together. The mixture was then adjusted to a pH of between 5 and 6 by adding acid either in the form of lactic acid or citric acid or if necessary alkaline in the form of sodium hydroxide drop wise to reach the desired pH range.

For the preparation of the oil continuous phase milk fat was added to a separate manufacturing vessel. Colour was also added to the fat mixture in the amount 0.004% by weight of the oil phase. The aqueous phase and oil phase were then mixed together at a ratio of 60% aqueous phase to 40% oil phase to form a water-in-oil emulsion and the emulsion was cooled and refined.

The components of the low fat butter expressed as a percentage of the starting and final compositions are tabulated in tables 1 and 2.

**Table 1:Starting Composition of Low Fat Butter**

| **Component** | **% by weight of starting composition** |
|---|---|
| Gum Arabic | 10.0% |
| Milk Fat | 40.0% |
| Water | 46.19% |
| Salt | 1.5% |
| Preservative | 0.20% |
| Colour | 0.01 % |
| Acid | 0.10% |
| Milk Protein | 2.0% |

**Table 2:Final Composition of Low Fat Butter**

| **Component** | **% by weight of final composition** |
|---|---|
| Fat | 40.0% |
| Protein | 3.1 % |
| Moisture | 48.59% |
| Minerals | 0.31 % |
| Fibre | 8.0% |

Microbiological, physical and chemical analysis of the butter was carried out and the results are indicated below.

### Analysis of Low Fat Butter

**Microbiology**
   Entrobacteriaceae 5 cfu/g (Violet Red Glucose Red Bile Agar @30°C for 24 hrs)
   Total Viable Count 165 cfu/g (Milk Plate Count Agar @30°C for 3 days)
   Yeast and Moulds 4 cfu/g (Rose Bengal Agar @25°C for 5 days)
   (wherein cfu/g = the number of colony forming units/per gram of butter tested).
**Colour**
   Yellow-White (Bench Marking)
**Flavour**
   Distinct butter flavour with no off notes
   Slight salty end-note (Sensory Panel)
**Texture & Rheological Properties**
   Firm spread with no oil separation.
   Spreads without oil separation.
**Shelf life & Stability**
   Maintained colour, flavour, microbiology, and texture with no oil separation similar to date of manufacture for 5 months at 0°C to 5°C.

### Example 2 - Preparation of Low Fat Margarine

The low fat margarine was prepared by adding water to a manufacturing vessel. Gum arabic was added to the water at a concentration of 4.5% by weight of the water and the gum arabic and water were mixed together until fully dissolved using an agitator to form an aqueous phase. 0.12% preservative by weight of the aqueous phase was then added to the mixture as well as salt in the amount 0.9% by weight of the aqueous phase, and mixed together. The mixture was then adjusted to a pH of between 5 and 6 by adding acid either in the form of lactic acid or citric acid or if necessary alkaline in the form of sodium hydroxide, drop wise to reach the desired pH range.

For the preparation of the oil continuous phase, milk fat was added to a separate manufacturing vessel. Colour was also added to the fat mixture in the amount 0.005% by weight of the oil phase. Flavour was added to the fat mixture in the amount 0.008% of the oil phase. The aqueous phase and oil phase were then mixed together at a ratio of 61 % aqueous phase to 39% oil phase to form a water-in-oil emulsion and the emulsion was cooled and refined.

The components of the low fat margarine expressed as a percentage of the starting and final compositions are tabulated in tables 3 and 4.

**Table 3:Starting Composition of Low Fat Margarine**

| **Component** | **% by weight of starting composition** |
|---|---|
| Gum Arabic | 9.0% |
| Vegetable Fat | 39.0% |
| Water | 50.17% |
| Salt | 1.5% |
| Colour | 0.01 % |
| Preservative | 0.20% |
| Flavour | 0.02% |
| Acid | 0.10% |

**Table 4:Final Composition of Low Fat Margarine**

| **Component** | **% by weight of final composition** |
|---|---|
| Fat | 39.1% |
| Protein | 0.56% |
| Moisture | 50.96% |
| Minerals | 0.35% |
| Salt | 1.6% |
| Fibre | 7.43% |

Microbiological, physical and chemical analysis of the margarine was carried out and the results are indicated below.

### Analysis of Low Fat Margarine

**Microbiology**
   Entrobacteriaceae 7 cfu/g (Violet Red Glucose Red Bile Agar @30°C for 24hrs)
   Total Viable Count 170 cfu/g (Milk Plate Count Agar @30°C for 3 days)
   Yeast and Moulds 8 cfu/g (Rose Bengal Agar @25°C for 5 days)
   (wherein cfu/g = the number of colony forming units per gram of margarine tested).
**Colour**
   Yellow - White (Bench Marking)
**Flavour**
   Clean oil flavour with no off notes
   Salty end note (Sensor Panel)
**Texture & Rheological Properties**
   Firm spread with no oil separation
   Spreads without oil separation
**Shelf life & Stability**
   Maintained colour, flavour, microbiology, and texture with no oil separation similar to date of manufacture for 5 months at 0°C to 5°C.

### Example 3 - Preparation of Low Fat Spread

The Low Fat spread was prepared by adding water to a manufacturing vessel. Gum arabic was added to the water at a concentration of 3.4% by weight of the water and the gum arabic and water were mixed together until fully dissolved using an agitator to form an aqueous phase. 0.5% milk protein by weight of the aqueous phase was then added to the mixture as well as stabiliser in the amount 0.2% by weight of the aqueous phase, preservatives in the amount 0.1 % by weight of the aqueous phase, salt at 0.75% and mixed together. The mixture was then adjusted to a pH of between 5 and 6 by adding acid either in the form of lactic acid or citric acid or if necessary alkaline in the form of sodium hydroxide, drop wise to reach the desired pH range.

For the preparation of the oil continuous phase, vegetable oil and milk fat was added to a separate manufacturing vessel. Colour was also added to the fat mixture in the amount 0.005% by weight of the oil phase. The aqueous phase and oil phase were then mixed together at a ratio of 50% aqueous phase to 50% oil phase to form a water-in-oil emulsion and the emulsion was cooled and refined.

The components of the low fat spread expressed as a percentage of the starting and final compositions are tabulated in tables 5 and 6.

**Table 5:Starting Composition of Low Fat Spread**

| **Component** | **% by weight of starting composition** |
|---|---|
| Gum Arabic | 9.0% |
| Fat | 30.0% vegetable oil |
| | 20.0% milk fat |
| Water | 37.77% |
| Salt | 1.5% |
| Colour | 0.01 % |
| Preservative | 0.20% |
| Flavour | 0.02% |
| Stabiliser | 0.40% |
| Acid | 0.10% |
| Milk Protein | 1.0% |

**Table 6:Final Composition of Low Fat Spread**

| **Component** | **% by weight of final composition** |
|---|---|
| Fat | 50.0% |
| Protein | 1.0% |
| Moisture | 39.77% |
| Fibre | 7.33% |
| Minerals | 0.30% |
| Salt | 1.6% |

Microbiological, physical and chemical analysis of the spread was carried out and the results are indicated below.

### Analysis of Low Fat Spread

**Microbiology**
   Entrobacteriaceae 3 cfu/g (Violet Red Glucose Red Bile Agar @30°C for 24 hrs)
   Total Viable Count 290 cfu/g (Milk Plate Count Agar@30°C for 3 days)
   Yeast and Moulds 10 cfu/g (Rose Bengal Agar @25°C for 5 days)
   (wherein cfu/g = the number of colony forming units per gram of spread tested)
**Colour**
   Yellow - White (Bench Marking)
**Flavour**
   Clean oil flavour with no off notes
   Salty end note (Sensory Panel)
**Texture & Rheological Properties**
   Firm spread with no oil separation
   Spreads without oil separation
**Shelf life & Stability**
   Maintained colour, flavour, microbiology, and texture with no oil separation similar to date of manufacture for 5 months at 0°C to 5°C.

## Claims

1. A low fat dairy product which is a water-in-oil emulsion comprising;
an oil continuous phase comprising fat; and
an aqueous dispersed phase comprising water and a gelling agent;
**characterised in that**
the gelling agent is gum arabic and is in the amount 2% to 35% by weight of the water.

2. A low fat dairy product as claimed in claim 1 wherein the gum arabic is in the amount 10% to 30% by weight of the water.

3. A low fat dairy product as claimed in claims 1 or 2 wherein the gum arabic is in the amount 2% to 10% by weight of the dairy product.

4. A low fat dairy product as claimed in any preceding claim wherein the gum arabic has a solubility in water in the range 10g to 50 g/100ml.

5. A low fat dairy product as claimed in any preceding claim wherein the gum arabic has a viscosity of between 70 and 130 cPs at a concentration of 25% by weight of the water.

6. A low fat dairy product as claimed in any preceding claim wherein the aqueous dispersed phase has a droplet size in the range 1 to 30 µm.

7. A low fat dairy product as claimed in any preceding claim wherein the oil continuous phase comprises fat in the amount 20% to 60% by weight of the dairy product.

8. A low fat dairy product as claimed in claim 7 wherein the oil continuous phase comprises fat at a concentration in the range 30% to 50% by weight of the dairy product.

9. A low fat dairy product as claimed in any preceding claim wherein the fat comprises at least 10% polyunsaturated fatty acids.

10. A low fat dairy product as claimed in any preceding claim wherein the fat is selected from the group comprising one or more of: milk fat; vegetable fat; vegetable oil; soy bean oil; sunflower oil; sesame oil; corn oil; safflower oil; palm oil; bean oil; olive oil; peanut oil; rapeseed oil; cottonseed oil; sardine oil; lard; tallow; linseed oil and sterols.

11. A low fat dairy product as claimed in any preceding claim wherein the aqueous dispersed phase further comprises a protein in the amount 0.5% to 15% by weight of the aqueous dispersed phase.

12. A low fat dairy product as claimed in claim 11 wherein the protein is a milk protein.

13. A low fat dairy product as claimed in any preceding claim wherein the aqueous dispersed phase further comprises a stabiliser in the amount 0.12% to 2.25% by weight of the aqueous dispersed phase.

14. A low fat dairy product as claimed in claim 13 wherein the stabiliser is selected from the group comprising alginate; pectin; guar; xanthan; gelatine; and carboxymethyl cellulose.

15. A low fat dairy product as claimed in any preceding claim wherein the aqueous dispersed phase further comprises a pro-biotic culture in the amount 0.02% to 0.2% by weight of the aqueous dispersed phase.

16. A low fat dairy product as claimed in any preceding claim wherein the aqueous dispersed phase further comprises a preservative in the amount 0.01% to 0.75% by weight of the aqueous dispersed phase.

17. A low fat dairy product as claimed in claim 16 wherein the preservative is one of potassium sorbate or nisin.

18. A low fat dairy product as claimed in any preceding claim wherein the oil continuous phase further comprises a colour in the amount 0.005% to 0.1% by weight of the oil continuous phase and wherein the colour is beta carotene.

19. A low fat dairy product as claimed in any preceding claim wherein the dairy product is one of a low fat butter, a low fat margarine, or a low fat spread.

20. A process for preparing a low-fat dairy product which is a water-in-oil emulsion comprising;
obtaining water and dissolving gum arabic in the water in the amount 2% to 35% by weight of the water to form an aqueous phase;
adjusting the aqueous phase to a pH of between 5.0 and 6.0;
combining the aqueous phase and an oil phase containing fat and mixing to form a water-in-oil emulsion;
cooling and refining the water-in-oil emulsion.

21. A process as claimed in claim 20 wherein the pH of the aqueous phase is adjusted by addition of an acidifier selected from the group comprising one of lactic acid or citric acid.

22. A process as claimed in claim 20 wherein the pH of the aqueous phase is adjusted by addition of an alkali selected from the group comprising sodium hydroxide.

## Patentansprüche

1. Fettarmes Molkereiprodukt, das eine Wasser-in-Öl-Emulsion ist, die Folgendes umfasst:
eine kontinuierliche Ölphase, die Fett umfasst; und
eine dispergierte wässrige Phase, die Wasser und ein Geliermittel umfasst;
das **dadurch gekennzeichnet ist,**
**dass** das Geliermittel Gummi arabicum ist und in der Menge von 2 Gewichts-% bis 35 Gewichts-% des Wassers vorliegt.

2. Fettarmes Molkereiprodukt nach Anspruch 1, worin das Gummi arabicum in der Menge von 10 Gewichts-% bis 30 Gewichts-% des Wassers vorliegt.

3. Fettarmes Molkereiprodukt nach Anspruch 1 oder 2, worin das Gummi arabicum in der Menge von 2 Gewichts-% bis 10 Gewichts-% des Molkereiprodukts vorliegt.

4. Fettarmes Molkereiprodukt nach einem vorstehenden Anspruch, worin das Gummi arabicum eine Löslichkeit in Wasser im Bereich von 10 g bis 50 g/100 ml hat.

5. Fettarmes Molkereiprodukt nach einem vorstehenden Anspruch, worin das Gummi arabicum eine Viskosität von zwischen 70 und 130 cPs bei einer Konzentration von 25 Gewichts-% des Wassers hat.

6. Fettarmes Molkereiprodukt nach einem vorstehenden Anspruch, worin die dispergierte wässrige Phase eine Tröpfchengröße im Bereich von 1 bis 30 µm hat.

7. Fettarmes Molkereiprodukt nach einem vorstehenden Anspruch, worin die kontinuierliche Ölphase Fett in der Menge von 20 Gewichts-% bis 60 Gewichts% des Molkereiprodukls umfasst.

8. Fettarmes Molkereiprodukt nach Anspruch 7, worin die kontinuierliche Ölphase Fett bei einer Konzentration im Bereich von 30 Gewichts-% bis 50 Gewichts-% des Molkereiprodukts umfasst.

9. Fettarmes Molkereiprodukt nach einem vorstehenden Anspruch, worin das Fett mindestens 10 % polyungesättigte Fettsäuren umfasst.

10. Fettarmes Molkereiprodukt nach einem vorstehenden Anspruch, worin das Fett aus der Gruppe ausgewählt ist, die eins oder mehrere der Folgenden umfasst:
Milchfelt; Pflanzenfelt; Pflanzenöl; Sojaöl; Sonnenblumenöl; Sesamöl; Maisöl; Safloröl; Palmöl; Bohnenöl; Olivenöl; Erdnussöl; Rapsöl; Baumwollsamenöl; Sardinenöl; Schmalz; Talg; Leinsamenöl und Sterole.

11. Fettarmes Molkereiprodukt nach einem vorstehenden Anspruch, worin die dispergierte wässrige Phase weiter ein Protein in der Menge von 0.5 Gewichts% bis 15 Gewichts-% der dispergierten wässrigen Phase umfasst.

12. Fettarmes Molkereiprodukt nach Anspruch 11, worin das Protein ein Milchprotein ist.

13. Fettarmes Molkereiprodukt nach einem vorstehenden Anspruch, worin die dispergierte wässrige Phase weiter einen Stabilisator in der Menge von 0,12 Gewichts-% bis 2,25 Gewichts-% der dispergierten wässrigen Phase umfasst.

14. Fettarmes Molkereiprodukt nach Anspruch 13, worin der Stabillsitor aus der Gruppe ausgewählt ist, die Folgendes umfasst: Alginat; Pectin; Guar; Xanthan; Gelatine und Carboxymethylcellulose.

15. Fettarmes Molkereiprodukt nach einem vorstehenden Anspruch, worin die dispergierte wässrige Phase weiter eine probiotische Kultur in der Menge von 0,02 Gewichts-% bis 0,2 Gewichts-% der dispergierten wässrigen Phase umfasst.

16. Fettarmes Molkereiprodukt nach einem vorstehenden Anspruch, worin die dispergierte wässrige Phase weiter ein Konservierungsmittel in der Menge von 0,01 Gewichts-% bis 0,75 Gewichts-% der dispergierten wässrigen Phase umfasst.

17. Fettarmes Molkereiprodukt nach Anspruch 16, worin das Konservierungsmittel eins von Kaliumsorbat oder Nisin ist.

18. Fettarmes Molkereiprodukt nach einem vorstehenden Anspruch, worin die kontinuierliche Ölphase weiter eine Farbe in der Menge von 0,005 Gewichts-% bis 0.1 Gewichts-% der kontinuierlichen Ölphase umfasst und worin die Farbe Beta-Caroten ist.

19. Fettarmes Molkereiprodukl nach einem vorstehenden Anspruch, worin das Molkereiprodukt eins von einer fettarmen Bulter, einer fettarmen Margarine oder einem fettarmen Aufstrich ist.

20. Verfahren zur Herstellung eines fettarmen Molkereiprodukts, das eine Wasser-in-Öl-Emulsion ist, das Folgendes umfasst;
Beschaffen von Wasser und Lösen von Gummi arabicum in dem Wasser in der Menge von 2 Gewichts-% bis 35 Gewiebis-% des Wassers zur Bildung einer wässrigen Phase,
Einstellen der wässrigen Phase auf einen pH von zwischen 5,0 und 6,0;
Vereinigen der wässrigen Phase und einer Ölphase, die Fett enthält, und Mischen zur Bildung einer Wasser-in-Öl-Emulsion:
Kühlen und Weiterentwickeln der Wasser-in-Öl-Emulsion.

21. Verfahren nach Anspruch 20, worin der pH der wässrigen Phase durch Zugabe eines Säuerungsmittels, das aus der Gruppe ausgewählt ist, die eins von Milchsäure oder Citronensäure umfasst, eingestellt wird.

22. Verfahren nach Anspruch 20, worin der pH der wässrigen Phase durch Zugabe eines Alkalis, das aus der Gruppe ausgewählt ist, die Natriumhydroxid umfasst, eingestellt wird.

## Revendications

1. Produit laitier à faible teneur en matière grasse qui est une émulsion d'eau dans l'huile comprenant :
une phase continue huileuse comprenant de la matière grasse ; et
une phase dispersée aqueuse comprenant de l'eau et un agent gélifiant;
**caractérisé en ce que**
l'agent gélifiant est la gomme arabique et est présent en la quantité de 2 % à 35 % en poids de l'eau.

2. Produit laitier à faible teneur en matière grasse selon la revendication 1 dans lequel la gomme arabique est présente en la quantité de 10 % à 30 % en poids de l'eau.

3. Produit laitier à faible teneur en matière grasse selon la revendication 1 ou 2 dans lequel la gomme arabique est présente en la quantité de 2 % à 10 % en poids du produit laitier.

4. Produit laitier à faible teneur en matière grasse selon l'une quelconque des revendications précédentes dans lequel la gomme arabique a une solubilité dans l'eau comprise dans la plage allant de 10 g à 50 g/100 ml.

5. Produit laitier à faible teneur en matière grasse selon l'une quelconque des revendications précédentes dans lequel la gomme arabique a une viscosité comprise entre 70 et 130 cPs à une concentration de 25 % en poids de l'eau.

6. Produit laitier à faible teneur en matière grasse selon l'une quelconque des revendications précédentes dans lequel la phase dispersée aqueuse a une taille de gouttelettes comprise dans la plage allant de 1 à 30 µm.

7. Produit laitier à faible teneur en matière grasse selon l'une quelconque des revendications précédentes dans lequel la phase continue huileuse comprend de la matière grasse en la quantité de 20 % à 60 % en poids du produit laitier.

8. Produit laitier à faible teneur en matière grasse selon la revendication 7 dans lequel la phase continue huileuse comprend de la matière grasse à une concentration comprise dans la plage allant de 30 % à 50 % en poids du produit laitier.

9. Produit laitier à faible teneur en matière grasse selon l'une quelconque des revendications précédentes dans lequel la matière grasse comprend au moins 10 % d'acides gras polyinsaturés.

10. Produit laitier à faible teneur en matière grasse selon l'une quelconque des revendications précédentes dans lequel la matière grasse est choisie dans le groupe comprenant une ou plusieurs matières grasses parmi : la matière grasse du lait, la graisse végétale, l'huile végétale, l'huile de soja, l'huile de tournesol, l'huile de sésame, l'huile de maïs, l'huile de carthame, l'huile de palme, l'huile de légumineuse papilionacée, l'huile d'olive, l'huile d'arachide, l'huile de colza, l'huile de coton, l'huile de sardine, le saindoux, le suif, l'huile de lin et les stérols.

11. Produit laitier à faible teneur en matière grasse selon l'une quelconque des revendications précédentes dans lequel la phase dispersée aqueuse comprend en outre une protéine présente en la quantité de 0,5 % à 15 % en poids de la phase dispersée aqueuse.

12. Produit laitier à faible teneur en matière grasse selon la revendication 11 dans lequel la protéine est une protéine du lait.

13. Produit laitier à faible teneur en matière grasse selon l'une quelconque des revendications précédentes dans lequel la phase dispersée aqueuse comprend en outre un agent stabilisant présent en la quantité de 0,12 % à 2,25 % en poids de la phase dispersée aqueuse.

14. Produit laitier à faible teneur en matière grasse selon la revendication 13 dans lequel l'agent stabilisant est choisi dans le groupe comprenant l'alginate, la pectine, le guar, le xanthane, la gélatine et la carboxyméthylcellulose.

15. Produit laitier à faible teneur en matière grasse selon l'une quelconque des revendications précédentes dans lequel la phase dispersée aqueuse comprend en outre une culture probiotique présente en la quantité de 0.02 % à 0.2 % en poids de la phase dispersée aqueuse.

16. Produit laitier à faible teneur en matière grasse selon l'une quelconque des revendications précédentes dans lequel la phase dispersée aqueuse comprend en outre un agent de conservation présent en la quantité de 0,01 % à 0,75 % en poids de la phase dispersée aqueuse.

17. Produit laitier à faible teneur en matière grasse selon la revendication 16 dans lequel l'agent conservateur est un composé parmi le sorbate de potassium ou la nisine.

18. Produit laitier à faible teneur en matière grasse selon l'une quelconque des revendications précédentes dans lequel la phase continue huileuse comprend en outre un colorant présent en la quantité de 0,005 % à 0,1 % en poids de la phase continue huileuse et dans lequel le colorant est le bêta-carotène.

19. Produit laitier à faible teneur en matière grasse selon l'une quelconque des revendications précédentes dans lequel le produit laitier est un produit parmi un beurre à faible teneur en matière grasse, une margarine à faible teneur en matière grasse ou une pâte à tartiner à faible teneur en matière grasse.

20. Procédé de préparation d'un produit laitier à faible teneur en matière grasse qui est une émulsion d'eau dans l'huile comprenant :
l'approvisionnement en eau et la dissolution de la gomme arabique dans l'eau en une quantité de 2 % à 35 % en poids de l'eau pour former une phase aqueuse ;
l'ajustement de la phase aqueuse à un pH compris entre 5,0 et 6,0;
la combinaison de la phase aqueuse et d'une phase huileuse contenant la matière grasse et le mélangeage pour former une émulsion d'eau dans l'huile;
le refroidissement et le raffinage de l'émulsion d'eau dans l'huile.

21. Procédé selon la revendication 20 dans lequel le pH de la phase aqueuse est ajusté par l'addition d'un agent acidifiant choisi dans le groupe comprenant un acide parmi l'acide lactique ou l'acide citrique.

22. Procédé selon la revendication 20 dans lequel le pH de la phase aqueuse est ajusté par l'addition d'un alcali choisi dans le groupe comprenant l'hydroxyde de sodium.
